# EUROPEAN PATENT APPLICATION

(11) **EP 2 955 687 A1**
(43) Date of publication of application: **16.12.2015**
(21) Application number: 14857541.8
(22) Date of filing: 21.10.2014
(51) Int. Cl.: G06Q 50/04, G05B 19/418

(54) **INFORMATION COLLECTION SYSTEM**

(30) Priority: 31.10.2013 JP 2013227113
(71) Applicant: Smart-FOA, Saitama 359-1132 (JP)
(72) Inventor: OKU, Masaharu, Tokorozawa-shi Saitama 359-1132 (JP)
(74) Representative: Willquist, Sofia Ellinor
(86) International application number: PCT/JP2014/077988
(87) International publication number: WO 2015/064427

(57) **Abstract**

Provided is an information collecting system which can easily handle data without considering entities of the data even when data unknown to the information collecting system is generated or collection of the unknown data is requested. The information collecting system comprises a managing region 11 reserved on memory in association with a data generating device of job-site data 100 and storing the job-site data 100 outputted by the corresponding data generating device. Type information 320 of the job-site data 100 to be collected is stored, the management region 11 is specified in accordance with the type information 320, and the job-site data 100 stored in the specified management region 11 is collected.

## Description

### FIELD OF THE INVENTION

The present invention relates to an information collecting system that collects job-site data generated at a factory, an office and the like.

Various facilities are operated in a factory, an office, etc. These facilities output job-site data indicating observation results to the facilities, works, or materials, such as error information and status information. This job-site data is important information which contributes to operation management, quality control of products, business management and the like of a factory or an office. However, the event information directly outputted by the facilities has only direct meanings indicating a code or a simple observation value, and place, time and date of the generation and has no secondary or tertiary meanings. Hence, in prior arts, the information obtained at a job-site level is interpreted sequentially at each level before reaching to a management and business operation level, and the event information is changed to have secondary or tertiary meanings in order to utilize the event information for each level.

Thus, the applicant has proposed an information collecting system that can automatically generate event information from job-site data generated in a huge amount every day as in JP 2012-234496 A.

This information collecting system stores a dictionary accommodating a model defining a type of each of supplementary information to be added to the job-site data. Moreover, a database storing the supplementary information with each of various contents is prepared.

Then, in accordance with the dictionary, each of the supplementary information is searched in the database, and the each of the searched supplementary information is added to the job-site data so as to reconstruct the event information. In the search, various combinations of the job-site data included in the reconstructed event information and each of the added supplementary information are used as a search key in searching other types of supplementary information. In the reconstruction, the supplementary information sequentially searched is sequentially added to the event information.

Moreover, collection condition information designating the type of the supplementary information to be included in the event information is acquired from a request terminal which requests collection of the event information, and the supplementary information is extracted from the reconstructed event information in accordance with the collection condition information so as to reconstruct new event information.

Hence, as viewed from the user operating the request terminal, the event information in which necessary information is written directly and easily to understand seems to be generated. Therefore, the user can understand the secondary or tertiary meanings of the event information upon receiving the event information without interrupting it.

### CITATION LIST

Patent Document 1: JP 2012-234496 A

Recently, data with types, formats, and structural forms unknown to an information collecting system frequent. Thus, handling of big data generated on a network has drawn attention in recent years, but how to collect the big data is the problem.

That is, in the prior-art information collecting system, handling of data is difficult unless identifiers of the type, format, and structural form are given to the data side and the data to be handled is defined on a system side. That is because defining all the data in advance is not practical. Moreover, it is not practical, either, to redesign such that unknown data is to be handled on the information collecting system side each time it is generated.

For example, if a sensor is changed at a factory, system design needs to be changed so that the job-site data outputted by the sensor can be handled by the information collecting system. Such a change of the system design restricts a layout change of the factory and a collecting method of an information collector, and a large labor is required even in changing the sensor.

The present invention was proposed in order to solve the above-described prior-art problems and has an object to provide an information collecting system which can easily handle data without considering entities of the data even when data unknown to the information collecting system is generated or collection of the unknown data is requested.

### SOLUTION TO PROBLEM

The information collecting system according to the present invention is an information collecting system connected to a data generating device for generating job-site data via a network and collecting a desired type of the job-site data and is characterized by comprising a dictionary storage block storing type information of the job-site data to be collected, a job-site data managing region reserved on memory in association with the data generating device, identified by a tag, and storing the job-site data outputted by the corresponding data generating device, an association storage block storing association between the type information and the tag, and a collecting block specifying the tag according to the type information stored by the dictionary storage block and collecting the job-site data from the job-site data managing region identified by the specified tag.

The information collecting system may be so configured that: it is connected to a database storing supplementary information of the job-site data via the network; it further comprises a supplementary information managing region reserved on the memory in association with an attribute value of the supplementary information, identified by a tag, and storing the supplementary information having the corresponding attribute value; the dictionary storage block stores the type information of the job-site data and the type information of the supplementary information in association with each other; the association storage block further stores the association between the type information of the supplementary information and the tag; and the collecting block specifies the tag according to the type information of the supplementary information stored by the dictionary storage block and collects the supplementary information stored in the supplementary information managing region identified by the specified tag.

An event generating block generating event information gathering the job-site data and the supplementary information collected by the collecting block into one dataset may be further provided.

It may be so configured that a plurality of pieces of j ob-site data is stored in the one job-site data managing region, the collecting block has an information processing block generating job-site data of a type different from that of the plurality of pieces of job-site data on the basis of those pieces of job-site data stored in the one job-site data managing region in accordance with predetermined type information stored by the dictionary storage block and collects the different type of job-site data generated by the information processing block in accordance with the predetermined type information.

The association storage block may store path information indicating whether the job-site data is to be collected or not after processing and the type information in association with each other, and the generating block may operate the information processing block in accordance with the path information.

### ADVANTAGEOUS EFFECT OF INVENTION

According to the present invention, without discriminating an entity such as a type, a format, and a structural form of the data, that is, without requiring program design for entity discrimination, almost any data can be handled uniformly in practice, and big data can be handled skillfully.

### BRIEF DESCRIPTION OF THE DRAWINGS

Fig. 1 is a block diagram illustrating a network configuration including an information collecting system according to a first embodiment;
Fig. 2 is a conceptual diagram illustrating event information;
Fig. 3 is a schematic diagram illustrating dictionary data according to the first embodiment;
Fig. 4 is a block diagram illustrating a detailed configuration of the information collecting system according to the first embodiment;
Fig. 5 is a block diagram illustrating a configuration of a dictionary editing device;
Fig. 6 is a block diagram illustrating a configuration of a collecting device according to the first embodiment;
Fig. 7 is a schematic diagram illustrating a guidance according to the first embodiment;
Fig. 8 is a flowchart illustrating management destination determining operation of job-site data of the information collecting system according to the first embodiment;
Fig. 9 is a flowchart illustrating management destination determining operation of supplementary information of the information collecting system according to the first embodiment;
Fig. 10 is a flowchart illustrating operation for generating the event information of the information collecting system according to the first embodiment;
Fig. 11 is a schematic diagram illustrating the first action of the information collecting system according to the first embodiment;
Fig. 12 is a schematic diagram illustrating the second action of the information collecting system according to the first embodiment;
Fig. 13 is a block diagram illustrating a collecting device of an information collecting system according to a second embodiment;
Fig. 14 is a schematic diagram illustrating a guidance according to the second embodiment;
Fig. 15 is a flowchart illustrating generating operation of event information of the information collecting system according to the second embodiment;
Fig. 16 is a schematic diagram illustrating an action of the information collecting system according to the second embodiment;
Fig. 17 is a schematic diagram of dictionary data according to a third embodiment;
Fig. 18 is a flowchart illustrating search operation of supplementary information of the information collecting system according to the third embodiment; and
Fig. 19 is a schematic diagram of an action of the information collecting system according to the third embodiment.

### DETAILED DESCRIPTION OF THE EMBODIMENTS

### (First embodiment)

### (Outline configuration)

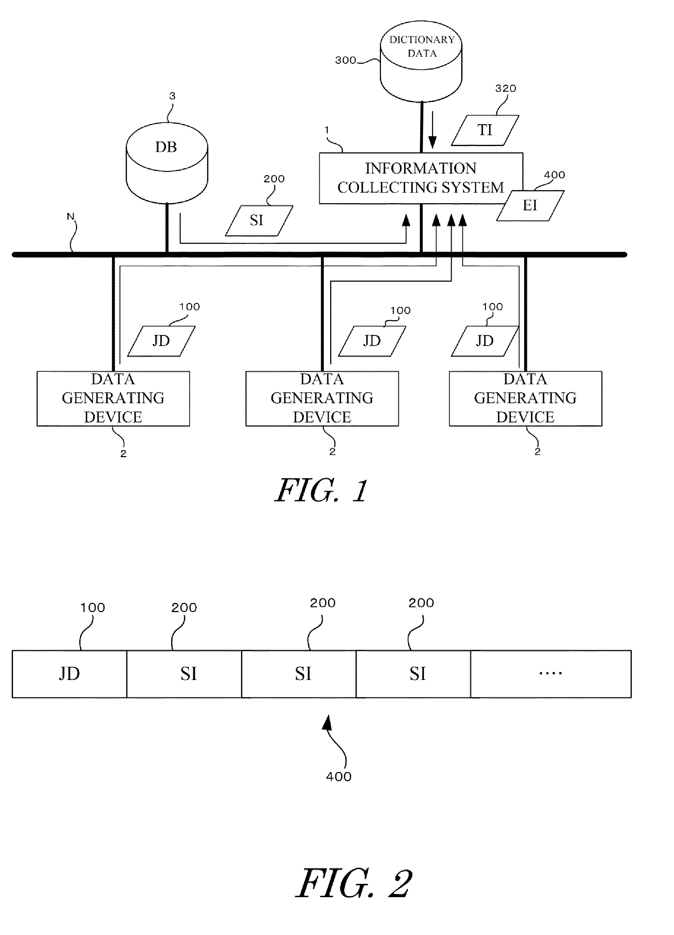

A first embodiment of an information collecting system according to the present invention will be described below in detail with reference to the drawings. Fig. 1 is a block diagram illustrating a network configuration including an information collecting system 1 according to this embodiment. The information collecting system 1 is connected to a network N. To the network N, one or more data generating devices 2 and a database 3 are further connected.

The information collecting system 1, the data generating device 2 and the database 3 are configured by including a computer and is provided with an arithmetic and control unit (CPU and the like), a main storage device (RAM and the like), an external storage device (HDD and the like) storing OS and applications, and a network adapter.

This information collecting system 1 is configured by coordination of a single computer or a plurality of computer elements such as a server and a router connected to the network N. The database 3 is a separate computer element integral with the information collecting system 1 or distributed on the network N. The data generating device 2 is a device having a function of monitoring facilities such as FA and the like operating at a factory or an office and includes a PLC (programmable logic controller), BCR, RFID, Pane CON, a mobile terminal, a web camera, and various sensors, for example.

The network N is a communication infrastructure transmitting/receiving data or commands converted into electric signals and conforms to a wired communication protocol such as IEEE802.3 and the like, a wireless communication protocol specified by IEEE802.11 or other protocols. It is a wired LAN network, a wireless LAN network, the Internet network or a communication line such as a dedicated line or combination of them, for example.

In the network N, the data generating device 2 generates job-site data 100. The job-site data 100 is an observation result of the facilities as a monitoring target of the data generating device 2 and is error information, status information and the like. The job-site data 100 is generated by detection of various phenomena or periodic observation by the data generating device 2, has various formats depending on the data generating device 2 such as image data, sound data, character string data and the like and has various expression formats such as a compression format depending on the data generating device 2.

This job-site data 100 is inputted by a user in some cases. A mobile terminal is connected to the network N, and the j ob-site data 100 is inputted by using the mobile terminal as a user interface.

The data generating device 2 adds headers of TCP and IP including an IP address of the information collecting system 1 and a port number of an information collecting application to the job-site data 100 and sends it out to the network N. Sending-out timing is at generation of an event or every predetermined period of time such as a one-day interval, assuming use of the system.

The information collecting system 1 generates event information 400 from the job-site data 100. The event information 400 is generated by gathering the job-site data 100 and various pieces of supplementary information 200 into one dataset as illustrated in Fig. 2. To this event information 400, the supplementary information 200 according to a type and a content of the job-site data 100 is added. The event information 400 is a variable length data in which these pieces of data are connected together and is described in XML language, for example.

The supplementary information 200 has background information of the event which is generation of the site information 100 as main contents. The background information is information required for analyzing and evaluating the event at each hierarchy of a construction, indicates a cause incurring the generation of the job-site data 100 directly or indirectly, and adds semantic contents that cannot be derived only from the contents of the job-site data 100 together with the job-site data 100 to the event information 400. For example, the supplementary information 200 indicates processing assisting data required for processing of the job-site data 100, comparison target data to be compared with the job-site data 100, analysis assisting data influencing the analysis, and evaluation assisting data influencing the evaluation of an analysis result.

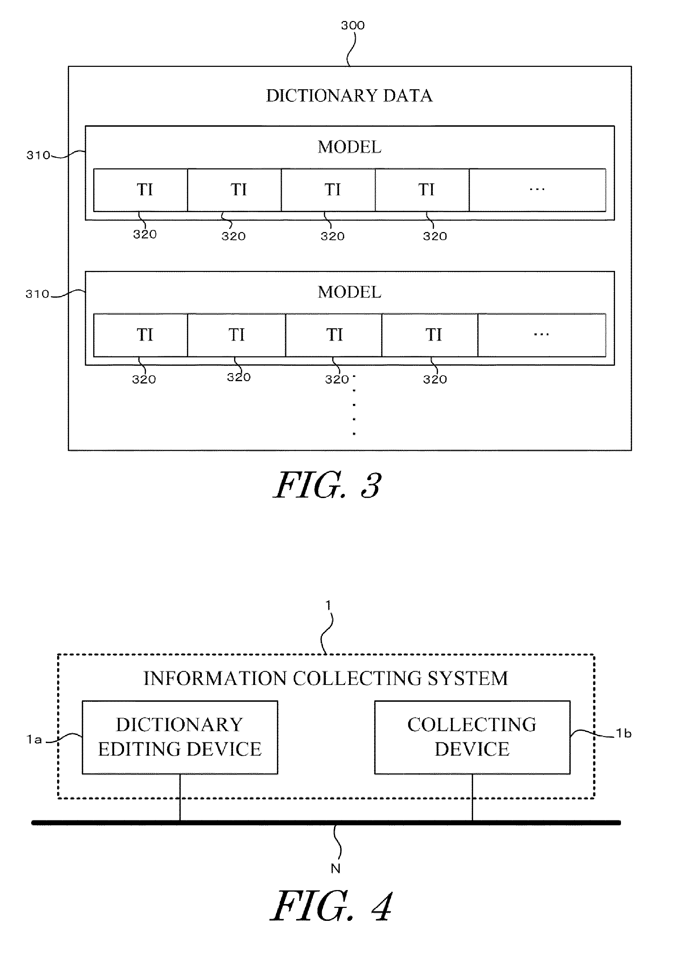

Moreover, this information collecting system 1 comprises dictionary data 300 in advance. As illustrated in Fig. 3, the dictionary data 300 records various models 310 of the event information 400. In each of the models 310, type information 320 is enumerated. The type information 320 indicates a type of information to be included in the event information 400. The information collecting system 1 gathers the job-site data 100 or the supplementary information 200 corresponding to the type information 320 enumerated in the one model 310 to the one event information 400.

However, the job-site data 100 and the supplementary information 200 might be only data indicating the contents at the time of its generation, and identification indicating a data name or a type of information is not given in some cases. Thus, the information collecting system 1 stores the job-site data 100 and the supplementary information 200 in memory regions divided in accordance with a source of the information, specifies the memory region with a tag and stores a relationship between the type information 320 and the tag in advance, whereby the job-site data 100 and the supplementary information 200 conforming to the type information 320 indicated in the dictionary data 300 are searched without paying attention to types of information thereof. That is, the type of information is not discriminated.

### (Detailed configuration)

Fig. 4 is a block diagram illustrating a detailed configuration of this information collecting system 1. The information collecting system 1 is constituted by a dictionary editing device 1a and a collecting device 1b. The dictionary editing device 1a stores the dictionary data editably and can be accessed from a computer terminal requesting collection of the event information 400. The collecting device 1b stocks the job-site data 100 and the supplementary information 200 in accordance with the source of information and generates the event information 400 from this stock. When the event information 400 is generated, the collecting device 1b copies and uses the dictionary data 300 in the dictionary editing device 1a.

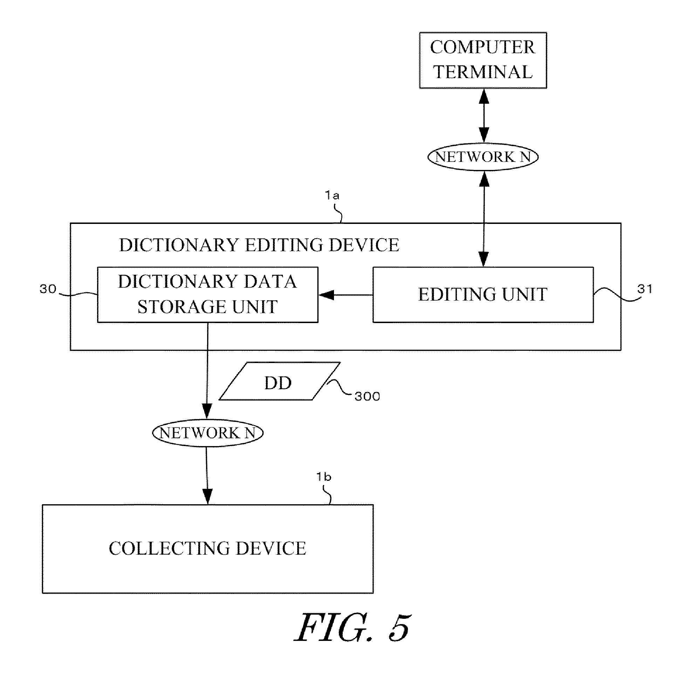

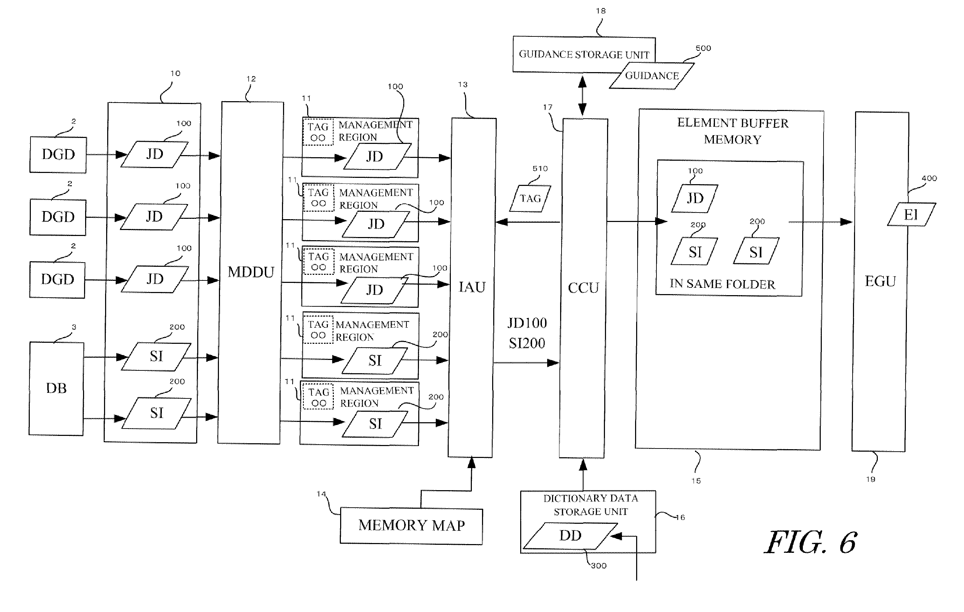

That is, the dictionary editing device 1a comprises a dictionary data storage unit 30 and an editing unit 31 as illustrated in Fig. 5. Moreover, the collecting device 1b comprises a temporary memory 10, a management region 11, a management destination determining unit 12, an information acquiring unit 13, a memory map 14, an element buffer memory 15, a dictionary data storage unit 16, a collection control unit 17, a guidance storage unit 18, and an event generating unit 19 as illustrated in Fig. 6.

In the dictionary editing device 1a, the dictionary data storage unit 30 is constituted mainly by a memory and stores the dictionary data 300. The editing unit 31 is constituted mainly by the CPU and the network adapter, receives an editing request from a computer terminal of a collection requester and edits the dictionary data 300 in accordance with the editing request. The editing unit 31 receives an editing request of addition/deletion of the model 310 and addition/deletion of the type information 320 enumerated in the model 310.

In the collecting device 1b, the temporary memory 10 is a queue of the job-site data 100 generated by the data generating device 2 and a queue of the supplementary information 200 accumulated in the database 3 and is a memory region where the data awaits for being moved to the management region 11 specified by the tag 510.

Each of the management regions 11 is a memory region specified by the tag 510 and is reserved in advance for each of the data generating device 2 and for each attribute value indicating the type of the supplementary information 200. The attribute value indicating the type of the supplementary information 200 is defined on the database 3.

The management destination determining unit 12 is constituted by including the CPU and sorts the job-site data 100 and the supplementary information 200 stored in the temporary memory 10 into each of the management regions 11. For example, the management destination determining unit 12 specifies the source of the job-site data 100 from a transmission source IP address and a port number added to the header and the like or specifies it by a connection port of a cable. Then, the management destination determining unit 12 makes the management region 11 according to the source of the information to store the job-site data 100.

Moreover, when the management destination determining unit 12 retrieves the supplementary information 200 from the database 3, for example, the source of the supplementary information 200 is specified by the attribute value indicating the type of the information, and the supplementary information 200 is made to be stored in the management region 11 according to the source of the information.

The dictionary data storage unit 16 is constituted by including a memory and stores the dictionary data 300. This dictionary data 300 is edited in advance and held in the dictionary editing device 1a. The collecting device 1b copies the dictionary data 300 of the dictionary editing device 1a to the dictionary data storage unit 16 in advance.

The collection control unit 17 is constituted by including a CPU and determines a collection destination of the job-site data 100 and the supplementary information 200. The collection control unit 17 determines the collection destination by referring to the dictionary data 300 and guidance 500 stored in the guidance storage unit 18. Then, the collection control unit 17 acquires the job-site data 100 and the supplementary information 200 via the information acquiring unit 13. The acquiring timing is timing when a change occurs in any of the management regions 11 of the job-site data 100 or periodic timing. The timing when a change occurs is timing when the new job-site data 100 is sorted into any one of the management regions 11, for example.

From the dictionary data 300, the type of information to be acquired is specified. The collection control unit 17 sequentially reads out the type information 320 enumerated in the model 310, compares the type information 320 with the guidance 500 and specifies the tag 510 associated with the type information 320.

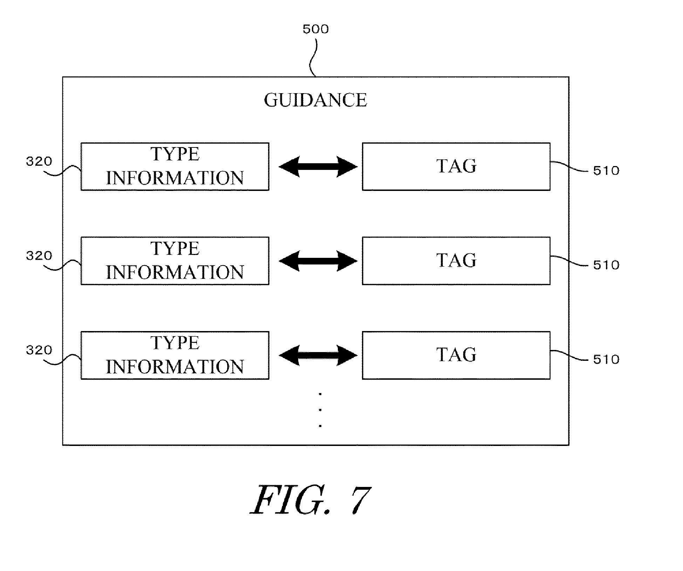

The guidance 500 is stored in the guidance storage unit 18 constituted by including a memory. This guidance 500 is a database in which the type information 320 and the tag 510 are associated with each other in a one-to-one manner as illustrated in Fig. 7. The collection control unit 17 specifies the tag 510 associated with the type information 320 specified in the dictionary data 300 from the guidance 500, delivers the specified tag 510 to the information acquiring unit 13, and receives the job-site data 100 or the supplementary information 200 as a response from the information acquiring unit 13.

The information acquiring unit 13 is constituted by including a CPU and executes acquisition of data under control of the collection control unit 17. That is, the information acquiring unit 13 reads out the job-site data 100 or the supplementary information 200 from the management region 11 specified by the tag 510 received from the collection control unit 17 and delivers it to the collection control unit 17. This information acquiring unit 13 refers to the memory map 14 when reading out the job-site data 100 or the supplementary information 200. The memory map 14 stores the tag 510 and a memory address of the management region 11 specified by that tag 510 in association with each other in the one-to-one manner.

The element buffer memory 15 is constituted by including a memory and stores the job-site data 100 and the supplementary information 200 acquired by the collection control unit 17 and the information acquiring unit 13. The job-site data 100 and the supplementary information 200 stored in the element buffer memory 15 from the same model 310 as a source in the dictionary data 300 are gathered and stored in the same folder.

The event generating unit 19 is constituted by including a CPU and generates the event information 400 from the job-site data 100 and the supplementary information 200 of the element buffer memory 15. The event generating unit 19 gathers the job-site data 100 and the supplementary information 200 stored in the same folder into the one event information 400. Specifically, the event generating unit 19 edits the job-site data 100 and the supplementary information 200 stored in the same folder into a linked dataset, and the dataset is made as the event information 400.

### (Operation)

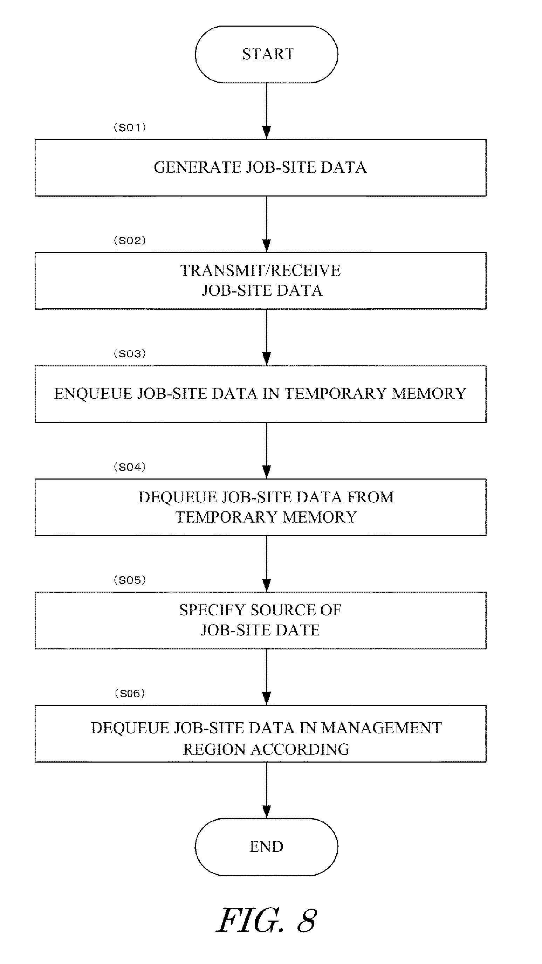

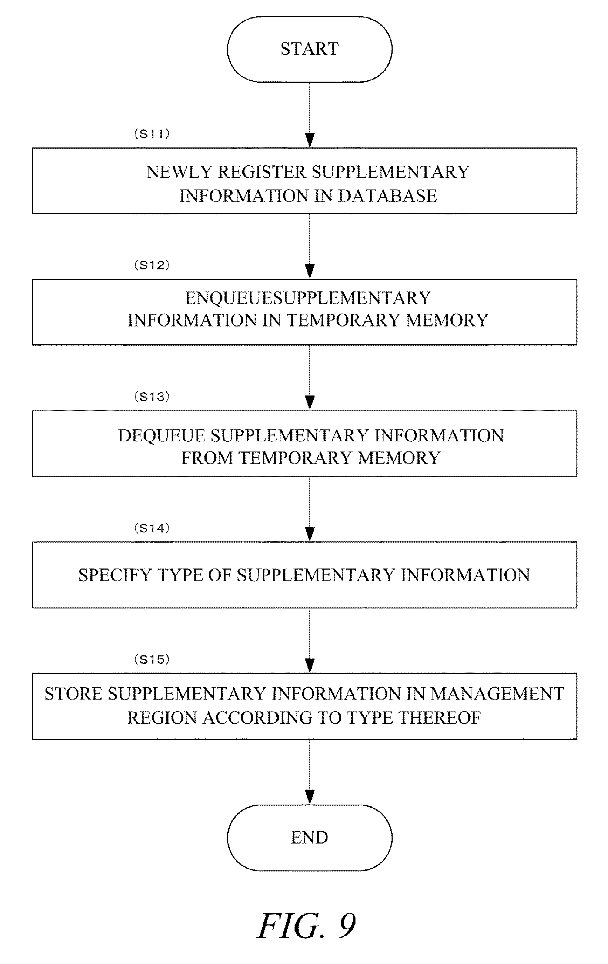

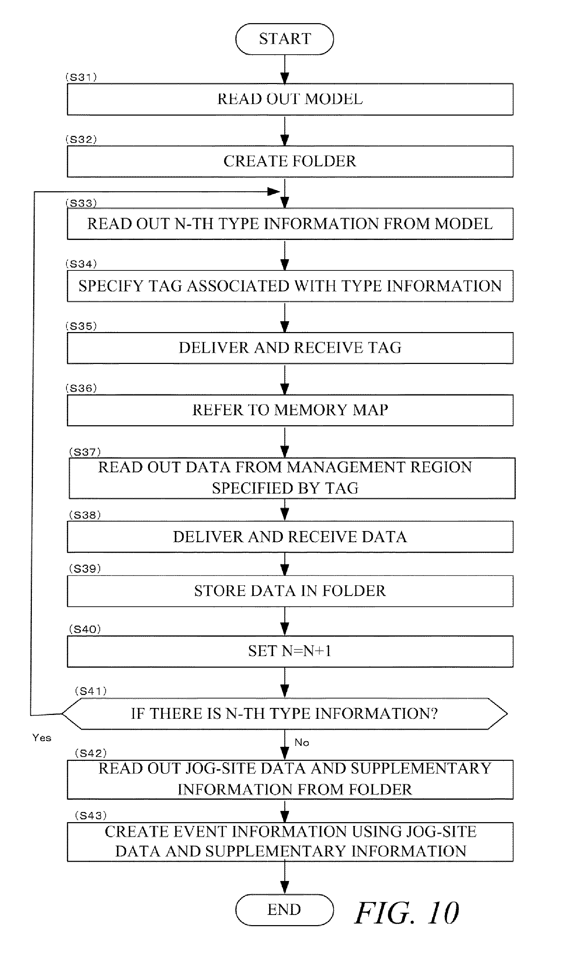

Operation of this information collecting system 1 will be described in detail on the basis of Figs. 8 to 10. Fig. 8 is a flowchart illustrating management destination determining operation of the job-site data 100. Fig. 9 is a flowchart illustrating management destination determining operation of the supplementary information 200. Fig. 10 is a flowchart illustrating operation for generating the event information 400 from the stocked job-site data 100 and supplementary information 200.

### (Management destination determination of job-site data 100)

As illustrated in Fig. 8, when the job-site data 100 is generated in the data generating device 2 (Step S01), the data generating device 2 transmits the job-site data 100 to the information collecting system 1 (Step S02). The information collecting system 1 enqueues the received job-site data 100 in the temporary memory 10 (Step S03).

The management destination determining unit 12 dequeues the job-site data 100 from the temporary memory 10 periodically or immediately (Step S04), specifies a source of information of the job-site data 100 (Step S05), and stores the dequeued job-site data 100 in the management region 11 according to the source of the information (Step S06).

The source of the information is specified by a transmission source address, a port number or a socket added to the job-site data 100 or a connection port of a cable and the like, for example. The management region 11 is discriminated by the transmission source address, the port number, the socket or the connection port of the cable. The management destination determining unit 12 stores the job-site data 100 in the management region 11 according to the transmission source address, the port number, the socket or the connection port of the cable.

That is, the management destination determining unit 12 recognizes only the source of the information of the job-site data 100 and processes all the job-site data 100 as a simple mass of data without paying attention to the type of information on whether the job-site data 100 indicates a temperature or an appearance, the type of a format such as whether the data is image data, text data or sound data, a form of a structure such as a compression format of the image data and the like. In other words, by handling all the job-site data 100 as a simple mass of data, handling of all the job-site data 100 is made possible.

### (Management destination determination of supplementary information 200)

As illustrated in Fig. 9, when the supplementary information 200 is newly registered in the database 3 (Step S11), the newly registered supplementary information 200 is enqueued in the temporary memory 10 with an attribute value indicating the type information 320 from the database 3 (Step S12). The enqueuing of the supplementary information 200 may be performed at immediate timing in response to the registration or may be performed altogether periodically.

When the management destination determining unit 12 dequeues the supplementary information 200 from the temporary memory 10 (Step S13), it specifies the type of information of the supplementary information 200 (Step S14) and stores the dequeued supplementary information 200 in the management region 11 according to the type information 320 (Step S15). The type information 320 is specified by the attribute value on the database 3 added to the supplementary information 200, for example. The management region 11 is discriminated by this attribute value. The management destination determining unit 12 stores the supplementary information 200 in the management region 11 according to the attribute value.

### (Generation of event information 400)

As illustrated in Fig. 10, the collection control unit 17 reads out the model 310 of the event information 400 from the dictionary data 300 stored in the dictionary data storage unit 16 (Step S31). After the model 310 is read out, the collection control unit 17 creates a folder corresponding to the model 310 in the element buffer memory 15 (Step S32). All the models 310 described in the dictionary data 300 may be sequentially read out and used for generation of the event information 400, or the model 310 according to a request may be read out from a computer terminal of another collection requester and used for generation of the event information 400.

After pre-processing on the basis of Steps S31 and S32 is finished, the collection control unit 17 reads out the N-th type information 320 from the read-out model 310 (Step S33). In process of generating the event information 400, N = 1 is set as initialization processing. The N-th follows the order counted from the header of the model 310.

The collection control unit 17 refers to the guidance 500 of the guidance storage unit 18 and specifies the tag 510 associated with the read-out type information 320 (Step S34). The collection control unit 17 delivers the specified tag 510 to the information acquiring unit 13 (Step S35). When receiving the tag 510, the information acquiring unit 13 refers to the memory map 14 (Step S36) and reads out data from the management region 11 specified by the received tag 510 (Step S37). The read-out data is delivered to the collection control unit 7 (Step S38). This read-out data is the job-site data 100 generated by any one of the data generating devices 2 or any of the supplementary information 200 in accordance with the management region 11.

When receiving data from the information acquiring unit 13, the collection control unit 17 stores the data in the folder prepared in the element buffer memory 15 (Step S39). The collection control unit 11 sets N = N + 1 (Step S40) and if there is the N-th type information 320 in the model 310 (Step S41, Yes), the routine returns to Step S33 and the search is repeated.

On the other hand, if the search for all the type information 320 has been finished (Step S41, No), search processing is finished. When the search processing is finished, the event generating unit 19 reads out the data stored in the folder, that is, the job-site data 100 and the supplementary information 200 (Step S42), gathers them into the same dataset and creates the event information 400 (Step S43).

As described above, the collection control unit 17 and the event generating unit 19 process the data stored in each of the management regions 11 without recognizing entities such as the type of the data, the type of the format or the form and without discrimination and as a result, the type of data according to the type information 320 of the model 310 is gathered in the event information 400.

### (Action)

In this information collecting system 1, the management destination determining unit 12 side recognizes locations of the job-site data 100 and the supplementary information 200 but is unconcerned with their entities. The collection control unit 17 and the event generating unit 19 sides are aware of the type of the information but are not concerned with the locations or entities of the job-site data 100 and the supplementary information 200 corresponding to the type of the information. That is, in this information collecting system 1, any data is gathered into the event information 400 without paying attention to the entities of the data.

In other words, the information collecting system 1 can handle the job-site data 100 and the supplementary information 200 having any entities without requiring discrimination of the entities of the data, and the event information 400 gathered according to the model of the dictionary data 300 can be created. Moreover, the job-site data 100 and the supplementary information 200 can be handled uniformly.

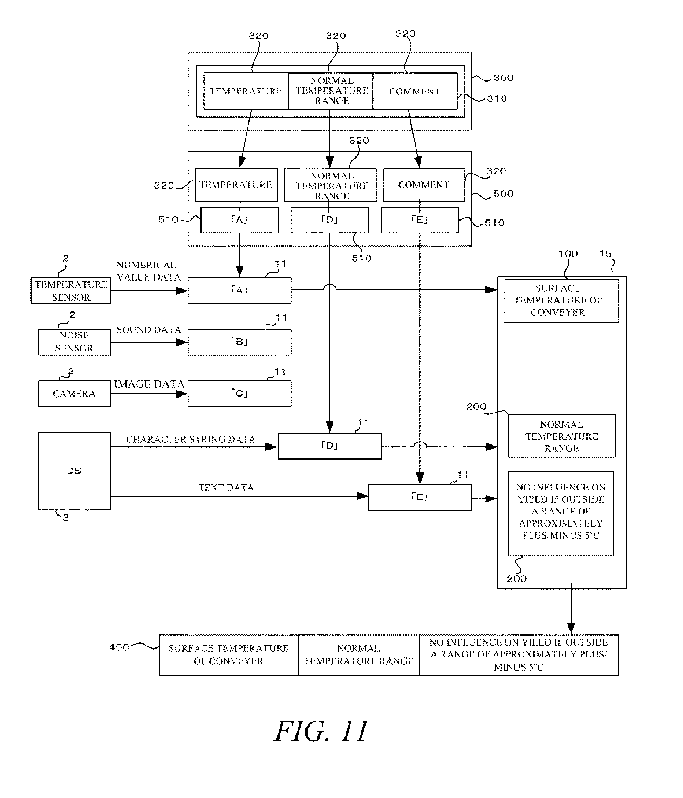

Specifically, as illustrated in Fig. 11, each of the data generating devices 2 of a temperature sensor, a noise sensor and a camera is connected to the network N. The temperature sensor outputs numerical value data of a surface temperature of a conveyer as the job-site data 100. The noise sensor outputs sound data recording a noise of the conveyer as the job-site data 100. The camera outputs image data of a component conveyed on the conveyer as the job-site data 100.

The job-site data 100 outputted by the temperature sensor is enqueued in the temporary memory 10 and moved by the management destination determining unit 12 to the management region 11 of "A" corresponding to the temperature sensor in the one-to-one manner. The job-site data 100 outputted by the noise sensor is enqueued in the temporary memory 10 and moved by the management destination determining unit 12 to the management region 11 of "B" corresponding to the noise sensor in the one-to-one manner. Moreover, the job-site data 100 outputted by the camera is enqueued in the temporary memory 10 and moved by the management destination determining unit 12 to the management region 11 of "C" corresponding to the camera in the one-to-one manner.

Moreover, the database 3 stores character string data indicating a numerical value range, for example. This character string data is stored with a normal temperature range as an attribute value. Moreover, the database 3 stores text data indicating that "no influence on yield if outside a range of approximately plus/minus 5 ° C". This text data is stored with a comment as an attribute value.

The supplementary information 200 of the normal temperature range and the supplementary information 200 of the comment are enqueued in the temporary memory 10. Then, the management destination determining unit 12 moves the supplementary information 200 of the normal temperature range to the management region 11 of "D" corresponding to the attribute value of the normal temperature range in the one-to-one manner. The management destination determining unit 12 moves the supplementary information 200 of the comment to the management region 11 of "E" corresponding to the attribute value of the comment in the one-to-one manner.

On the other hand, in the dictionary data 300, the source, the location or the entity of the information is not described but only the type information 320 is enumerated, and the type information 320 indicating the temperature, the normal temperature range, and the comment is enumerated in one model 310, for example.

Moreover, in the guidance 500, the tag 510 of "A" is associated with the type information 320 of the "temperature", the tag 510 of "D" is associated with the type information 320 of the "normal temperature range", and the tag 510 of "E" is associated with the type information 320 of the "comment".

In this case, the collection control unit 17 reads out the type information 320 of the "temperature" from the dictionary data 300, refers to the guidance 500, specifies the tag 510 of "A" and delivers it to the information acquiring unit 13. The information acquiring unit 13 receives the tag 510 of "A", refers to the memory map 14, takes out the data from the management region 11 specified by the tag 510 of "A" and delivers it to the collection control unit 17. The information collecting system 1 acquires the numerical value data indicating the surface temperature of the conveyer outputted from the temperature sensor but without paying attention to the entity of this taken-out data.

Subsequently, the collection control unit 17 reads out the type information 320 of the "normal temperature range" from the dictionary data 300, refers to the guidance 500, specifies the tag 510 of "D", and delivers it to the information acquiring unit 13. The information acquiring unit 13 receives the tag 510 of "D", refers to the memory map 14, takes out the data from the management region 11 specified by the tag 510 of "D", and delivers it to the collection control unit 17. This taken-out data is the character string data of the numerical value range stored in the database 3 with the normal temperature range as the attribute value.

Moreover, the collection control unit 17 reads out the type information 320 of the "comment" from the dictionary data 300, refers to the guidance 500, specifies the tag 510 of "E", and delivers it to the information acquiring unit 13. The information acquiring unit 13 receives the tag 510 of "E", refers to the memory map 14, takes out the data from the management region 11 specified by the tag 510 of "E", and delivers it to the collection control unit 17. This taken-out data is the text data stored in the database 3 with the comment as the attribute value.

The collection control unit 17 stores each of the delivered data in the same folder in the element buffer memory 15. That is, the numerical value data indicating the "surface temperature of the conveyer", the character string data of the numerical value range indicating the "normal temperature range", and the text data indicating the "comment" are stored in the same folder. Then, the event generating unit 19 gathers each of the data stored in the same folder into one dataset and generates the event information 400. In this event information 400, the job-site data 100 indicating the "surface temperature of the conveyer", the supplementary information 200 of the numerical value range indicating the "normal temperature range" supplementing this job-site data 100, and the supplementary information 200 of the comment indicating that "no influence on yield if outside a range of approximately plus/minus 5°C" are gathered.

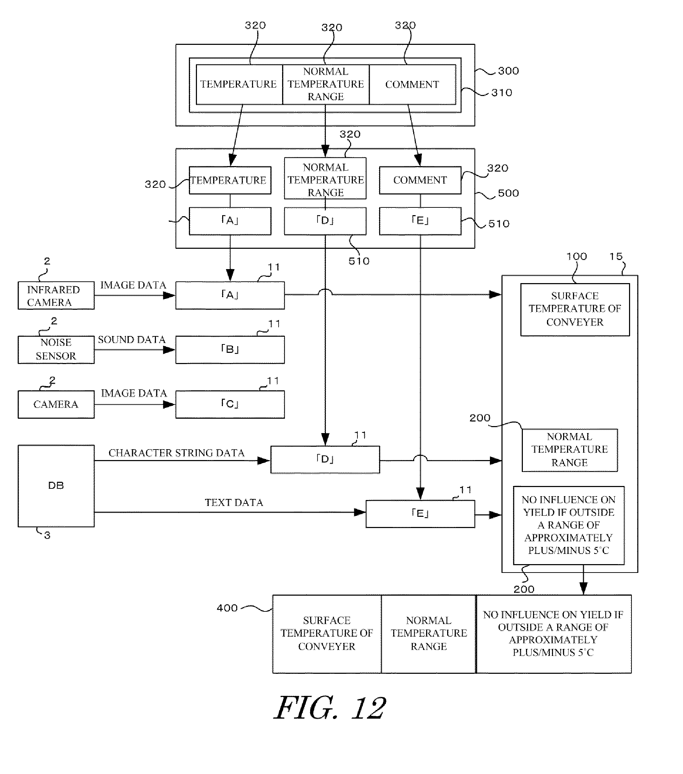

Moreover, as illustrated in Fig. 12, assume that the temperature sensor outputting the numerical value data is changed to an infrared camera outputting image data of temperature distribution at a site. Even after this change, this image data is stored in the management region 11 specified by the tag 510 of the "A" via the temporary memory 10 similarly to a state before the change.

At this time, the data is acquired from the management region 11 specified by the tag 510 of "A" with reference to the guidance 500 with respect to the type information of the "temperature" enumerated in the model 310 of the dictionary data 300.

Therefore, even if the temperature sensor is removed at the site and changed to the infrared camera instead or even if the format of the data is changed from the numerical value data to the image data, the information collecting system 1 handles this image data without requiring any program modification and gathers job-site data G relating to the temperature in the event information 400.

### (Effect)

As described above, the information collecting system 1 has a dictionary storage block storing the type information 320 of the job-site data 100 to be collected. Moreover, it also has the management region 11 reserved on the memory in association with the data generating device 2 and storing the job-site data outputted by the corresponding data generating device 2. Moreover, the information collecting system 1 has a collecting block of the job-site data 100, and this collecting block specifies the management region 11 in accordance with the type information 320 stored by the dictionary storage block and collects the job-site data 100 stored in the specified management region 11. The dictionary storage block is the dictionary data storage unit 16 in the first embodiment. The collecting block is the collection control unit 17 and the information acquiring unit 13 in the first embodiment.

As a result, in this information collecting system 1, the job-site data 100 conforming to the type information 320 can be collected without discriminating the entity of the job-site data 100. That is, regardless of the type of information of the job-site data 100, the format of the job-site data 100 or the structural form of the job-site data 100, program design for entity discrimination of the job-site data 100 becomes unnecessary. Thus, the information collecting system 1 can handle any data integrally in practice.

Moreover, the information collecting system 1 comprises an association storage block storing association between the type information 320 and the management region 11, and the collecting block is configured to collect the job-site data 100 from the management region 11 relating to the type information 320 stored by the dictionary storage block. The association storage block corresponds to the guidance storage unit 18 in the first embodiment. Regarding the association between the type information 320 and the management region 11, it may be so configured that the management region 11 is identified by the tag 510, and the type information 320 and the tag 510 identifying the management region 11 are stored in association with each other.

As a result, even if the unknown job-site data 100 is generated, or even if the type, format or structural form of the information of the job-site data 100 is changed, the informant collecting system 1 side can continuously collect the data only by adding and modifying the association between the type information 320 and the management region 11, and big data can be handled skillfully.

Moreover, the information collecting system 1 is connected to the database 2 storing the supplementary information 200 via the network N. This information collecting system 1 further comprises the management region 11 reserved on the memory, in association with the attribute value of the supplementary information 200, and storing the supplementary information 200 having the corresponding attribute value. The dictionary storage block stores the type information 320 of the job-site data 100 and the type information 320 of the supplementary information 200 in association with each other. The collecting block specifies the management region 11 in accordance with the type information 320 of the supplementary information 200 stored by the dictionary storage block and collects the supplementary information 200 stored in the specified management region 11.

As a result, even the job-site data 100 and the supplementary information 200 can be handled uniformly, and program design for discriminating entities of a large quantity of data becomes unnecessary, and thus, occurrence of unknown data or increase/decrease of the type of data can be easily handled.

Moreover, the information collecting system 1 further comprises the event generating unit 19 for generating the event information 400 in which the job-site data 100 and the supplementary information 200 collected by the collecting block are gathered into one dataset. As a result, secondary and tertiary semantic contents of the big data as the event information 400 can be understood immediately.

### (Second embodiment)

### (Configuration)

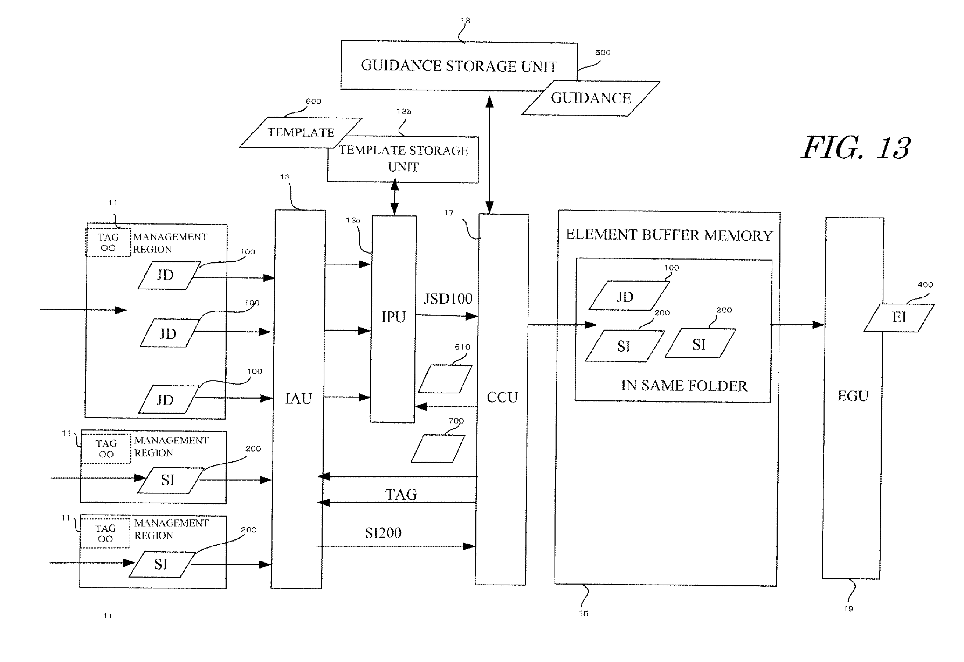

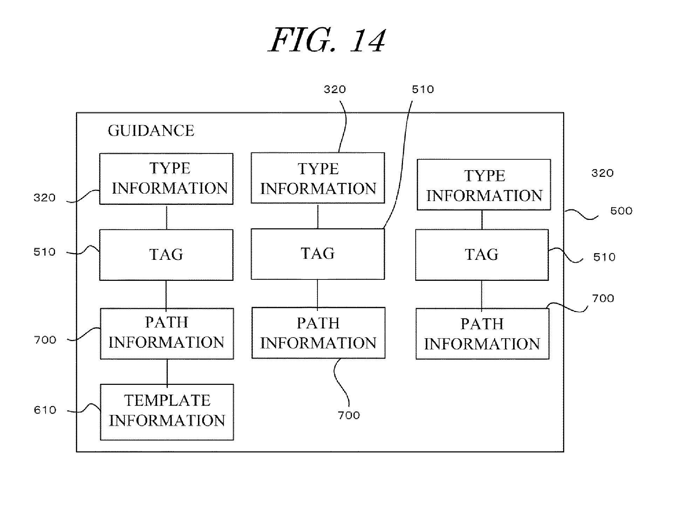

An information collecting system 1 according to a second embodiment will be described in detail with reference to the attached drawings. The same reference numerals are given to the same configurations and the same functions as those of the first embodiment and detailed explanation will be omitted. Fig. 13 is a configuration diagram illustrating a collecting device 1b of the information collecting system 1 according to the second embodiment. Fig. 14 is a schematic view illustrating the guidance 500. In Fig. 13, a configuration of the collecting device 1b is partially omitted.

As illustrated in Fig. 13, in this information collecting system 1, an information processing unit 13a and a template storage unit 13b are provided. The template storage unit 13b is constituted by mainly including a memory and stores a template 600. The template 600 describes a processing method of the job-site data 100 in a format capable of computer processing. For example, the template storage unit 13b stores a calculation template 600 in which a calculation equation for averaging is described, a Celsius conversion template 600 in which a calculation equation for converting numerical value data indicating a temperature to Celsius is described and the like. The information processing unit 13a is constituted by mainly including a CPU, selects the template 600 stored in the template storage unit 13b and processes the job-site data 100 stored in the management region 11 in accordance with the template 600.

For example, in accordance with the calculation template 600, the information processing unit 13a averages a plurality of pieces of the job-site data 100 stored in the management region 11 specified by the tag 510 received by the information acquiring unit 13. The information acquiring unit 13 delivers an average value calculated by the information processing unit 13a to the collection control unit 17 as the job-site data 100.

Moreover, for example, in accordance with the Celsius conversion template 600, the information processing unit 13a converts the job-site data 100 stored in the management region 11 specified by the tag 510 received by the information acquiring unit 13 to Celsius. The information acquiring unit 13 delivers the temperature data indicated in Celsius calculated by the information processing unit 13a to the collection control unit 17 as the job-site data 100.

As illustrated in Fig. 14, in the guidance 500, the tag 510, path information 700, and template information 610 are associated with each other by each being associated with the type information 320. The path information 700 indicates an information acquiring method of the information acquiring unit 13. The template information 610 specifies the template 600. The collection control unit 17 delivers the path information 700 and the template information 610 in addition to the tag 510 to the information acquiring unit 13 in order to instruct the collecting method in addition to the collection destination of the data.

One of the path information 700 indicates the collecting method not requiring processing for delivering the job-site data 100 or the supplementary information 200 to the collection control unit 17 without processing as in the first embodiment. This path information 700 is not associated with the template information 610. Another one of the path information 700 indicates the collecting method requiring processing for delivering the job-site data 100 or supplementary information 200 processed in accordance with the template 600 specified by the template information 610 to the collection control unit 17.

If a plurality of pieces of the job-site data 100 or supplementary information 200 is required as averaging or the like, it is only necessary to stock a certain number of pieces of the job-site data 100 or supplementary information 200 to one management region 11 in advance and to use the stocked job-site data 100 or supplementary information 200. As a stocking method, the oldest information may be updated to the latest information.

### (Operation)

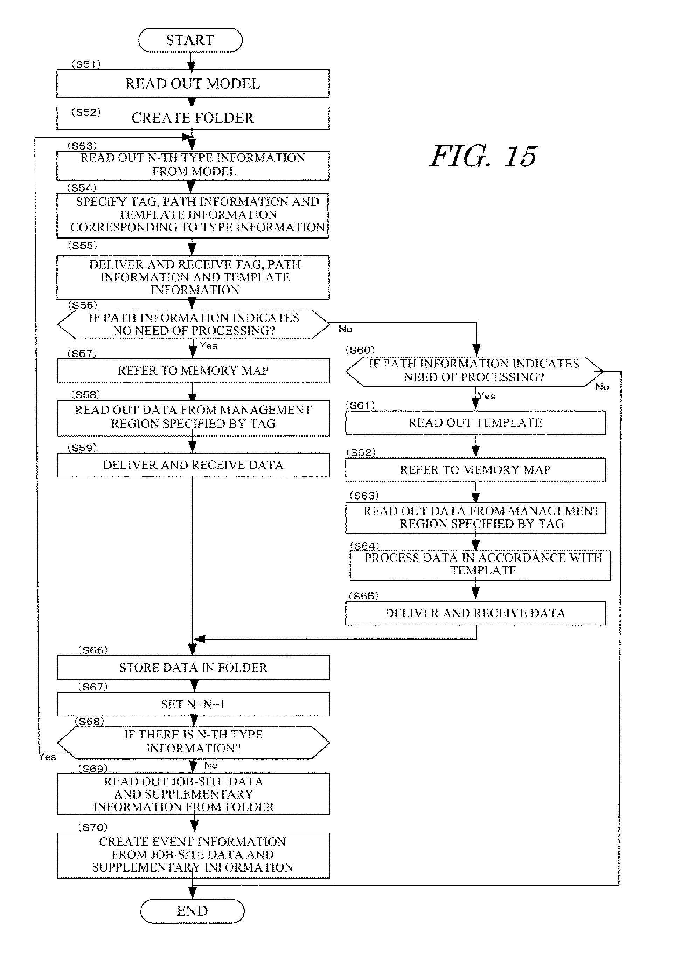

Fig. 15 is a flowchart illustrating generating operation of the event information 400 of this information collecting system 1. As illustrated in Fig. 15, the collection control unit 17 reads out the model 310 of the event information 400 from the dictionary data 300 stored in the dictionary data storage unit 16 (Step S51).

When the model 310 is read out, the collection control unit 17 creates a folder corresponding to the model 310 in the element buffer memory 15 (Step S52). Then, the collection control unit 17 reads out the N-th type information 320 from the model 310 (Step S53).

When the type information 320 is read out, the collection control unit 17 refers to the guidance 500 of the guidance storage unit 18, specifies the tag 510, the path information 700 and the template information 610 associated with the read-out type information 320 (Step S54), and delivers them to the information acquiring unit 13 (Step S55). The non-existing template information 610 is not transmitted. When the path information 700 indicates no need of processing, the template information 610 is "Null".

When the path information 700 indicating no need of processing is delivered (Step S56, Yes), the information acquiring unit 13 refers to the memory map 14 (Step S57), reads out the latest data from the management region 11 specified by the tag 510 (Step S58), and delivers it to the collection control unit 17 (Step S59).

On the other hand, when the path information 700 indicating need of processing is delivered to the information acquiring unit 13 (No at Step S56 and Yes at Step S60), the information processing unit 13a reads out the template 600 specified by the template information 610 from the template storage unit 13b (Step S61). Moreover, the information acquiring unit 13 refers to the memory map 14 (Step S62) and reads out data from the management region 11 specified by the tag 510 (Step S63). Then, the information processing unit 13a processes the read-out data in accordance with the template 600 (Step S64) and delivers the processed data to the collection control unit 17 (Step S65).

When receiving the data from the information acquiring unit 13, the collection control unit 17 stores the data in the folder (Step S66). The collection control unit 17 sets N = N + 1 (Step S67) and if the N-th type information 320 is present in the model 310 (Step S68, Yes), the routine returns to Step S53, and the search is repeated. On the other hand, if the search for all the type information 320 has been finished (Step S68, No), the search processing is finished.

When the search processing is finished, the event generating unit 19 reads out the data stored in the folder, that is, the job-site data 100 and the supplementary information 200 (Step S69) and adds them to one event information 400 (Step S70).

### (Action)

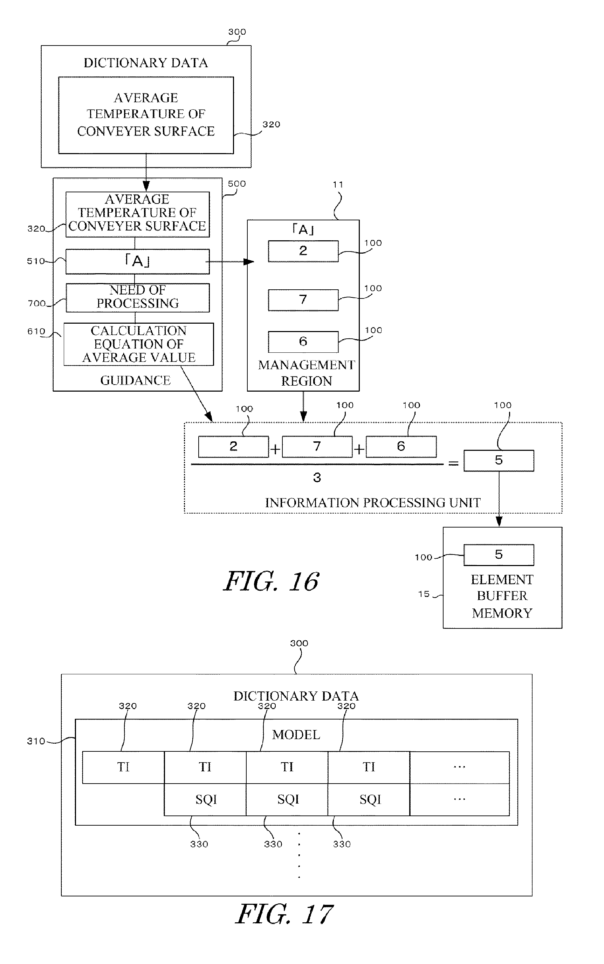

As illustrated in Fig. 16, the dictionary data 300 includes the type information 320 indicating an "average temperature of a conveyer surface". This type information 320 is obtained by edition of the dictionary data 300 by the information requester and inclusion into the model 310 without paying attention to non-existence of the data generating device 2 outputting the average temperature of the conveyer surface, for example. However, in the management region 11 specified by the tag "A", a certain number, which is 2 or more, of pieces of the job-site data 100 outputted from the data generating device 2 which is a temperature sensor is stocked.

When reading out the type information 320 indicating the "average temperature of the conveyer surface" from the model 310, the collection control unit 17 refers to the guidance 500, acquires the tag 510 of "A", the path information 700 indicating need of processing, and the template information 610 of the template 600 including a calculation equation of the average value as a set and delivers it to the information acquiring unit 13.

When the path information 700 indicating need of processing is delivered to the information acquiring unit 13, the information processing unit 13a calculates the average value from all the job-site data 100 stored in the management region 11 specified by the tag 510 of "A" in accordance with the calculation equation described in the template 600 specified by the template information 610. Then, the information acquiring unit 13 delivers this average value to the collection control unit 17 as the job-site data 100.

### (Effect)

As described above, in this information collecting system 1, a plurality of pieces of the job-site data 100 is stored in one management region 11. Then, in accordance with the predetermined type information 320 stored in the dictionary storage block, on the basis of the plurality of pieces of job-site data 100 stored in one management region 11, the information processing unit 13a for generating the job-site data 100 of a type different from those pieces of the job-site data 100 is provided.

As a result, even the data which becomes present only after the processing such as the average temperature of the conveyer surface or even if the format, form, location or the like of the data is unknown, the data can be handled. Particularly, in edition of the dictionary data 300 or installation of the data generating device 2, consideration to non-existence of appropriate data can be reduced.

Moreover, the template storage unit 13b for storing the template 600 describing the information processing method of the information processing unit 13a is further provided, and the association storage block is configured to store association among the type information 320, the management region 11, and the template 600. As a result, even if non-existing data is requested, it can be handled only by the guidance 500 and preparation of the template 600 without modifying the entire system, and consideration to non-existence of appropriate data can be further reduced.

The association storage block stores the path information 700 indicating whether or not to collect the job-site data 100 after processing and the type information 320 in association with each other, and by operating the information processing unit 13a in accordance with the path information 700, non-existing data can be handled not by modification but by addition of a program in design of the information acquiring unit 13, it is effective.

### (Third embodiment)

The information collecting system 1 according to a third embodiment will be described in detail by referring to the attached drawings. The same reference numerals are given to the same configurations and the same functions as those of the first embodiment or the second embodiment and detailed explanation will be omitted.

Fig. 17 is a schematic view illustrating the dictionary data 300 according to the third embodiment. In each of the models 310 of this dictionary data 300, search query information 330 is associated with each type information 320. The search query information 330 indicates a search key and a searching method when the supplementary information 200 is searched.

Particularly, the search query information 330 specifies the job-site data 100 or the supplementary information 200 having been moved to the element buffer memory 15 to be gathered into the event information 400 as a search key.

That is, the information collecting system 1 according to the third embodiment uses the contents of the job-site data 100 included in the event information 400 or the contents of the supplementary information 200 having been already added as a search key in the search of the supplementary information 200. In other words, various types of information supplementing the job-site data 100 are sequentially added to the event information 400, and various types of search keys for searching other supplementary information 200 are sequentially added.

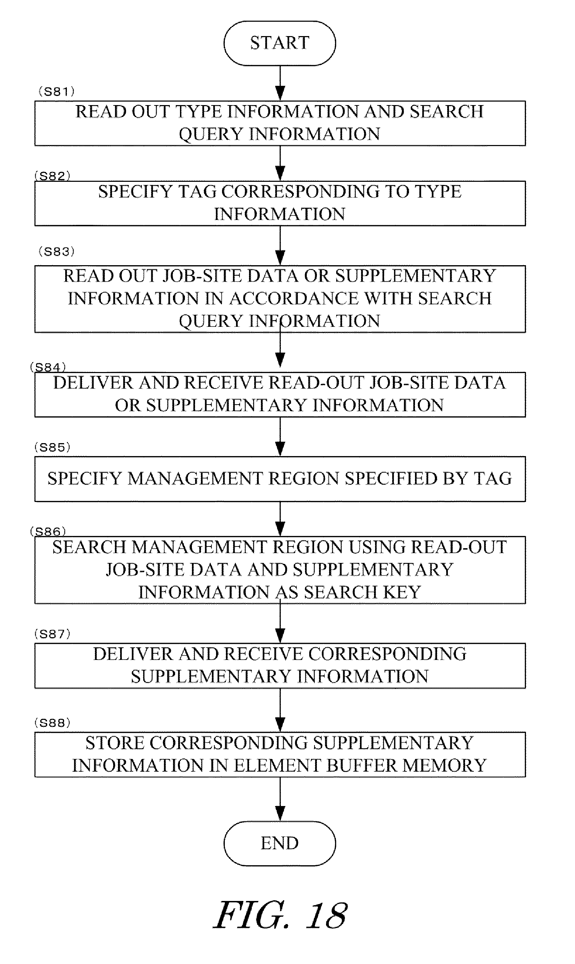

Fig. 18 is a flowchart illustrating search operation of the supplementary information 200 of this information collecting system 1. As illustrated in Fig. 18, the collection control unit 17 reads out the type information 320 and the search query information 330 from the model 310 of the dictionary data 300 (Step S81).

When the type information 320 and the search query information 330 have been read out, the collection control unit 17 refers to the guidance 500 of the guidance storage unit 18 and specifies the tag 510 associated with the read-out type information 320 (Step S82). Moreover, the collection control unit 17 refers to the search query information 330 and reads out the job-site data 100 or the supplementary information 200 corresponding to the search key from the element buffer memory 1 (Step S83).

Then, the collection control unit 17 delivers the specified tag 510 and the job-site data 100 or the supplementary information 200 to the information acquiring unit 13 (Step S84) . When receiving the tag 510, the information acquiring unit 13 refers to the memory map 14 and specifies the management region 11 specified by the received tag 510 (Step S85). When the management region 11 is specified, the information acquiring unit 13 searches in the specified management region 11 using the received job-site data 100 or the supplementary information 200 as a search key (Step S86).

When the corresponding supplementary information 200 is detected, the information acquiring unit 13 delivers the corresponding supplementary information 200 to the collection control unit 17 (Step S87). The collection control unit 17 stores the received supplementary information 200 as data in a folder prepared in the element buffer memory 15 (Step S88).

### (Action)

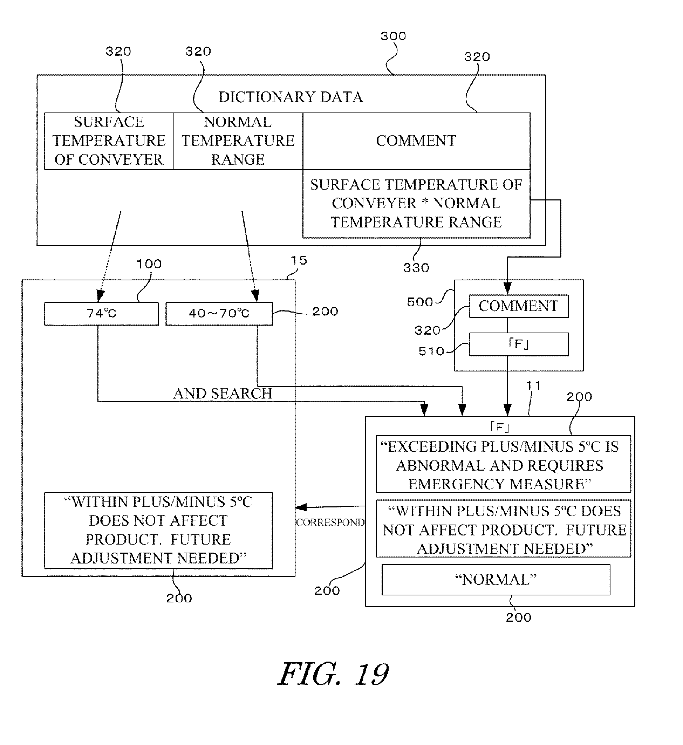

As illustrated in Fig. 19, in the model 310 referred to by the dictionary data 300, it is assumed that the type information 320 indicating the conveyer surface temperature, the normal temperature range and the comment is enumerated, and with the type information 320 indicating the comment, the search query information 330 expressing the AND search of the conveyer surface temperature and the normal temperature range is associated. Then, it is assumed that the job-site data 100 indicating "74°C" is acquired with respect to the type information 320 indicating the conveyer surface temperature, and the supplementary information 200 indicating a numerical value range of "40 to 70 °C" is acquired with respect to the type information 320 indicating the normal temperature range.

Moreover, it is assumed that in the guidance 500, the tag 510 of "F" is associated with the type information 320 indicating the comment, and in the management region 11 specified by the tag 510 of "F", each of the supplementary information 200 of "exceeding plus/minus 5°C is abnormal and requires emergency measure", "within plus/minus 5°C does not affect product. Future adjustment needed", and "normal" is stocked.

In this case, when the collection control unit 17 reads out the type information 320 indicating the comment from the dictionary data 300, the tag 510 of "F" associated with the corresponding type information 320 in the guidance 500, the job-site data 100 indicating "74°C" and the supplementary information 200 indicating the numerical value range of "40 to 70 °C" read out of the element buffer memory 15 in accordance with the search query information 330 associated with the type information 320 indicating the comment are delivered to the information acquiring unit 13.

The information acquiring unit 13 executes the search in the management region 11 specified by the tag 510 of "F" as a target by using the job-site data 100 indicating "74°C" and the supplementary information 200 indicating the numerical value range of "40 to 70 °C" as a search key. In this search, the supplementary information 200 of "within plus/minus 5°C does not affect product. Future adjustment needed" among the three types of the supplementary information 200 is retrieved, and the information acquiring unit 13 reads out the corresponding supplementary information 200 and delivers it to the collection control unit 17.

The collection control unit 17 stores the supplementary information 200 of "within plus/minus 5°C does not affect product. Future adjustment needed" in the folder in which the job-site data 100 indicating "74°C" and the supplementary information 200 indicating the numerical value range of "40 to 70 °C".

Then, the event generating unit 19 gathers the job-site data 100 indicating the conveyer surface temperature of "74°C", the supplementary information 200 indicating the normal temperature range of the numerical value range of "40 to 70 °C", and the supplementary information indicating the comment of "within plus/minus 5°C does not affect product. Future adjustment needed" into the same dataset and creates the event information 400.

As the search method, not only the AND search but various methods can be used. For example, ambiguous search or the like may be used. The ambiguous search is also called a semantic search and is a method of making a search from semantic contents of the search key.

### (Effect)

As described above, this information collecting system 1 further comprises the element buffer memory 15 for storing the job-site data 100 and the supplementary information 200 and is configured to collect other types of the supplementary information 200 to be included in the event information 400 by using the job-site data 100 and the supplementary information 200 stored in the element buffer memory 15 as a search key. By block of this method of temporary storage in the element buffer memory 15, collection of search keys becomes easier than the method of sequential addition to the event information 400.

### REFERENCE NUMERALS

- 1: information collecting system
- 1a: dictionary editing device
- 1b: collecting device
- 2: data generating device
- 3: database
- 10: temporary memory
- 11: management region
- 12: management destination determining unit
- 13: information acquiring unit
- 13a: information processing unit
- 13b: template storage unit
- 14: memory map
- 15: element buffer memory
- 16: dictionary data storage unit
- 17: collection control unit
- 18: guidance storage unit
- 19: event generating unit
- 30: dictionary data storage unit
- 31: editing unit
- 100: job-site data
- 200: supplementary information
- 300: dictionary data
- 310: model
- 320: type information
- 330: search query information
- 400: event information
- 500: guidance
- 510: tag
- 600: template
- 610: template information
- 700: path information
- N: network

## Claims

1. An information collecting system connected to a data generating device generating job-site data via a network and collecting a desired type of the job-site data, comprising:
a dictionary storage block storing type information of the job-site data to be collected;
a job-site data managing region reserved on memory in association with the data generating device, identified by a tag, and storing the job-site data outputted by the corresponding data generating device;
an association storage block storing association between the type information and the tag; and
a collecting block specifying the tag according to the type information stored by the dictionary storage block and collecting the job-site data from the job-site data managing region identified by the specified tag.

2. The information collecting system according to claim 1, wherein the information collecting system is connected to a database storing supplementary information of the job-site data via the network,
the information collecting system further comprising a supplementary information managing region reserved on the memory in association with an attribute value of the supplementary information, identified by a tag, and storing the supplementary information having the corresponding attribute value,
wherein:
the dictionary storage block stores the type information of the job-site data and the type information of the supplementary information in association with each other;
the association storage block further stores the association between the type information of the supplementary information and the tag; and
the collecting block specifies the tag according to the type information of the supplementary information stored by the dictionary storage block and collects the supplementary information stored in the supplementary information managing region identified by the specified tag.

3. The information collecting system according to claim 2, further comprising an event generating block generating event information gathering the job-site data and the supplementary information collected by the collecting block into one dataset.

4. The information collecting system according to any one of claims 1-3, wherein:
a plurality of pieces of job-site data is stored in the one job-site data managing region;
the collecting block has an information processing block generating job-site data of a type different from that of the plurality of pieces of job-site data on the basis of those pieces of job-site data stored in the one j job-site data managing region in accordance with predetermined type information stored by the dictionary storage block; and
the collecting block collects the different type of job-site data generated by the information processing block in accordance with the predetermined type information.

5. The information collecting system according to claim 2, wherein:
the association storage block stores path information indicating whether the job-site data is to be collected after processing or without processing and the type information in association with each other; and
the generating block operates the information processing block in accordance with the path information.
